# EUROPEAN PATENT APPLICATION

(11) **EP 3 919 577 A1**
(43) Date of publication of application: **08.12.2021**
(21) Application number: 21177087.0
(22) Date of filing: 01.06.2021
(51) Int. Cl.: C09J 7/21

(54) **PRESSURE-SENSITIVE ADHESIVE TAPE**

(30) Priority: 03.06.2020 JP 2020097020
(71) Applicant: Nitto Denko Corporation, Ibaraki-shi Osaka 567-8680 (JP)
(72) Inventor: Sawamura, Amane, Osaka, 567-8680 (JP); Yamamoto, Shuhei, Osaka, 567-8680 (JP)
(74) Representative: Hoffmann Eitle

(57) **Abstract**

A double-sided pressure-sensitive adhesive tape 1 includes a nonwoven fabric carrier 2 and a first pressure-sensitive adhesive layer 3 disposed on one side of the nonwoven fabric carrier 2 in a thickness direction. A colorant is contained in the nonwoven fabric carrier 2, and is not contained in the first pressure-sensitive adhesive layer 3. Then, a basis weight of the nonwoven fabric carrier 2 is adjusted to be 10 g/m² or more and 30 g/m² or less, and a thickness of the nonwoven fabric carrier 2 is adjusted to be 20 µm or more and 50 µm or less.

The pressure-sensitive adhesive tape is used for fixing a wire harness.

## Description

### TECHNICAL FIELD

The present invention relates to a pressure-sensitive adhesive tape.

### BACKGROUND ART

In various industrial fields, a pressure-sensitive adhesive tape is used to fix an object to an substrate. For example, in the production of various industrial products such as automobiles, a plurality of objects adhere to an substrate by a plurality of pressure-sensitive adhesive tapes. However, when the pressure-sensitive adhesive tape is missed, the object may fall off from the substrate, and reliability of the product may be lowered. Therefore, it is desirable to improve visibility of the pressure-sensitive adhesive tape.

As such a pressure-sensitive adhesive tape, for example, a pressure-sensitive adhesive sheet including a nonwoven fabric and a pressure-sensitive adhesive layer disposed on the nonwoven fabric with the pressure-sensitive adhesive layer including a colorant has been proposed (ref: for example, Patent Document 1).

### Citation List

### Patent Document

Patent Document 1: Japanese Unexamined Patent Publication No. 2015-40218

### SUMMARY OF THE INVENTION

### PROBLEM TO BE SOLVED BY THE INVENTION

Thus, the pressure-sensitive adhesive tape may adhere to a curved surface of the substrate when the object adheres to the substrate. However, when the pressure-sensitive adhesive sheet described in Patent Document 1 adheres to the curved surface, the pressure-sensitive adhesive sheet may be peeled from the curved surface of the substrate due to elasticity of the nonwoven fabric.

The present invention provides a pressure-sensitive adhesive tape which is capable of improving visibility and suppressing peeling from an substrate.

### MEANS FOR SOLVING THE PROBLEM

The present invention [1] includes a pressure-sensitive adhesive tape including a nonwoven fabric carrier and a pressure-sensitive adhesive layer disposed at one side of the nonwoven fabric carrier in a thickness direction, wherein the nonwoven fabric carrier contains a colorant, a basis weight of the nonwoven fabric carrier is 10 g/m² or more and 30 g/m² or less, a thickness of the nonwoven fabric carrier is 20 µm or more and 50 µm or less, and the pressure-sensitive adhesive layer does not contain a colorant.

The present invention [2] includes the pressure-sensitive adhesive tape described in the above-described [1], wherein the pressure-sensitive adhesive layer contains a water-dispersed pressure-sensitive adhesive composition.

The present invention [3] includes the pressure-sensitive adhesive tape described in the above-described [1] or [2] used for fixing a wire harness.

### EFFECT OF THE INVENTION

In the pressure-sensitive adhesive tape of the present invention, the nonwoven fabric carrier contains a colorant, while the pressure-sensitive adhesive layer does not contain a colorant. Then, since the basis weight of the nonwoven fabric carrier is the above-described lower limit or more and the thickness of the nonwoven fabric carrier is the above-described lower limit or more, it is possible to improve visibility of the pressure-sensitive adhesive tape. Further, since the basis weight of the nonwoven fabric carrier is the above-described upper limit or less and the thickness of the nonwoven fabric carrier is the above-described upper limit or less, it is possible to reduce an elastic force of the nonwoven fabric carrier, and it is possible to suppress peeling of the pressure-sensitive adhesive tape from an substrate.

### BRIEF DESCRIPTION OF THE DRAWINGS

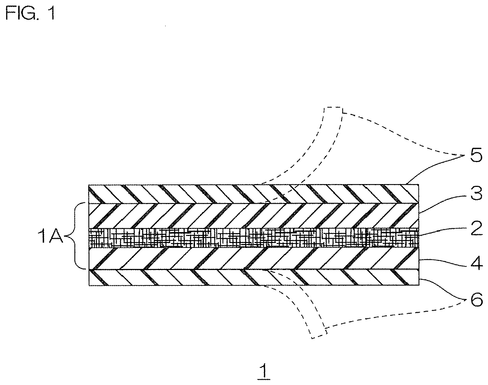

FIG. 1 shows a schematic configuration view of a double-sided pressure-sensitive adhesive tape as one embodiment of a pressure-sensitive adhesive tape of the present invention.

### DESCRIPTION OF EMBODIMENTS

### 1. Double-Sided Pressure-Sensitive Adhesive Tape

A double-sided pressure-sensitive adhesive tape 1 as one embodiment of a pressure-sensitive adhesive tape of the present invention is described with reference to FIG. 1.

The double-sided pressure-sensitive adhesive tape 1 includes a nonwoven fabric carrier 2, a first pressure-sensitive adhesive layer 3, a second pressure-sensitive adhesive layer 4, a first release liner 5, and a second release liner 6.

The nonwoven fabric carrier 2 is formed by entangling fibers without weaving. Examples of the fiber of the nonwoven fabric carrier 2 include natural fibers (for example, plant fibers such as wood pulp, manila hemp, and cotton, animal fibers such as wool and silk, and the like), synthetic fibers (for example, cellulose-based fibers such as acetate-based fibers and rayon-based fibers, polyester-based fibers, polyamide-based fibers, polyvinyl alcohol-based fibers (vinylon fibers), and the like), and inorganic fibers (for example, glass fibers, carbon fibers, and the like). These fibers may be used alone or in combination of two or more.

The fiber preferably includes natural fibers and/or synthetic fibers, more preferably includes at least one fiber selected from the group consisting of plant fibers, polyvinyl alcohol-based fibers, and cellulose-based fibers, and further more preferably includes at least one fiber selected from the group consisting of wood pulp, rayon-based fibers, and polyvinyl alcohol-based fibers.

The nonwoven fabric carrier 2 contains a colorant. In other words, the nonwoven fabric carrier 2 contains a fiber and a colorant.

Examples of the colorant include inorganic pigments (for example, black pigments such as carbon black, red pigments such as red lead and iron oxide, yellow pigments such as yellow lead and yellow zinc, blue pigments such as ultramarine blue, Prussian blue, and YInMn blue, white pigments such as zinc oxide, white lead, lithopone, titanium dioxide, and baryta powder, and the like), organic pigments, polycyclic pigments, azo pigments, rake pigments, fluorescent pigments, direct dyes (for example, black dyes, red dyes, yellow dyes, blue dyes, and the like), reactive dyes, sulfur dyes, basic dyes, acid dyes, metal-containing acid dyes, indigo dyes, threne dyes, disperse dyes, and cationic dyes. Examples of the direct dye include azo-based and anthraquinone-based. These colorants may be used alone or in combination of two or more.

The colorant is appropriately selected in accordance with the color of the substrate. The colorant preferably has a different color from the substrate. For example, when the substrate is a ceiling material of a vehicle and has a pale color such as white, the colorant preferably has a black color.

The colorant preferably contains an inorganic pigment, more preferably contains a black pigment, and further more preferably contains carbon black. The colorant preferably consists of an inorganic pigment.

When the colorant contains the inorganic pigment, it is possible to suppress transfer of the colorant from the nonwoven fabric carrier 2 to the first pressure-sensitive adhesive layer 3 and/or the second pressure-sensitive adhesive layer 4, and it is also possible to suppress contamination of a manufacturing facility (for example, a roll and the like) of the double-sided pressure-sensitive adhesive tape 1 by the colorant.

A content ratio of the colorant is, for example, 0.05 parts by mass or more, preferably 0.5 parts by mass or more, and for example, 2.0 parts by mass or less, preferably 1.5 parts by mass or less with respect to 100 parts by mass of the fiber (nonwoven fabric carrier before adding a colorant).

When the content ratio of the colorant is the above-described lower limit or more, it is possible to reliably improve visibility of the double-sided pressure-sensitive adhesive tape 1.

A basis weight of the nonwoven fabric carrier 2 is 10 g/m² or more, preferably 14 g/m² or more, and 30 g/m² or less, preferably 20 g/m² or less.

When the basis weight of the nonwoven fabric carrier 2 is the above-described lower limit or more, it is possible to improve the visibility of the double-sided pressure-sensitive adhesive tape 1. When the basis weight of the nonwoven fabric carrier 2 is the above-described upper limit or less, it is possible to reduce an elastic force of the nonwoven fabric carrier 2, and it is possible to improve adhesive properties of the double-sided pressure-sensitive adhesive tape 1 with respect to a curved surface. Therefore, it is possible to suppress peeling of the double-sided pressure-sensitive adhesive tape 1 from the curved surface.

A thickness of the nonwoven fabric carrier 2 is 20 µm or more, preferably 25 µm or more, more preferably 32 µm or more, and 50 µm or less, preferably 45 µm or less.

When the thickness of the nonwoven fabric carrier 2 is the above-described lower limit or more, it is possible to reliably improve the visibility of the double-sided pressure-sensitive adhesive tape 1. When the thickness of the nonwoven fabric carrier 2 is the above-described upper limit or less, it is possible to reliably reduce the elastic force of the nonwoven fabric carrier 2, and it is possible to reliably improve the adhesive properties of the double-sided pressure-sensitive adhesive tape 1 with respect to the curved surface. Therefore, it is possible to stably suppress the peeling of the double-sided pressure-sensitive adhesive tape 1 from the curved surface.

The air permeability of the nonwoven fabric carrier 2 is, for example, 0.10s or more, preferably 0.15s or more, and for example, 1.00s or less, preferably 0.80s or less, more preferably 0.50s or less. The air permeability is the time at which 100 cc of the air passes through a sample in which four nonwoven fabric carriers are laminated, and can be measured in conformity with the method described in JIS P8177: 2009 (hereinafter, the same).

The total light transmittance of the nonwoven fabric carrier 2 is, for example, 5% or more, and 30% or less. The total light transmittance can be measured in conformity with the method described in JIS K 7136 (hereinafter, the same).

In order to produce the nonwoven fabric carrier 2, for example, a nonwoven fabric carrier without a colorant is immersed into a colorant-containing liquid containing a colorant and then dried. It is also possible to form the nonwoven fabric carrier 2 from fibers after the fibers are colored by the colorant.

The first pressure-sensitive adhesive layer 3 is disposed at one side of the nonwoven fabric carrier 2 in a thickness direction. Specifically, the first pressure-sensitive adhesive layer 3 is disposed on one surface of the nonwoven fabric carrier 2 in the thickness direction. The first pressure-sensitive adhesive layer 3 has a flat plate shape (sheet shape). A thickness of the first pressure-sensitive adhesive layer 3 is, for example, 40 µm or more and 80 µm or less.

The first pressure-sensitive adhesive layer 3 does not contain the above-described colorant. Therefore, it is possible to improve a pressure-sensitive adhesive force of the first pressure-sensitive adhesive layer 3 as compared with a case where the first pressure-sensitive adhesive layer 3 contains a colorant.

The first pressure-sensitive adhesive layer 3 contains a pressure-sensitive adhesive composition. The pressure-sensitive adhesive composition is not particularly limited unless it contains a colorant. As the pressure-sensitive adhesive composition, preferably, a water-dispersed pressure-sensitive adhesive composition is used from the viewpoint of environmental load. In other words, the first pressure-sensitive adhesive layer 3 contains a water-dispersed pressure-sensitive adhesive composition, and is preferably made of a water-dispersed pressure-sensitive adhesive composition.

As the water-dispersed pressure-sensitive adhesive composition, for example, a water-dispersed pressure-sensitive adhesive composition described in Japanese Unexamined Patent Publication No. 2011-16943 is used.

The water-dispersed pressure-sensitive adhesive composition contains at least a (meth)acrylic polymer. The (meth)acrylic is synonymous with methacrylic and/or acrylic.

The (meth)acrylic polymer is, for example, prepared by emulsion polymerization of a (meth)acrylic monomer by adding an emulsified liquid containing a (meth)acrylic monomer, an emulsifier, and water to an initiator solution containing a polymerization initiator (described later).

The (meth)acrylic monomer contains an alkyl (meth)acrylate as a main component.

Examples of the alkyl (meth)acrylate include alkyl (meth)acrylates having an alkyl group having 1 to 3 carbon atoms (for example, methyl (meth)acrylate, ethyl (meth)acrylate, propyl (meth)acrylate, and the like) and alkyl (meth)acrylates having an alkyl group having 4 to 12 carbon atoms (for example, butyl (meth)acrylate, isobutyl (meth)acrylate, sec-butyl (meth)acrylate, pentyl (meth)acrylate, isopentyl (meth)acrylate, hexyl (meth)acrylate, 2-ethylhexyl (meth)acrylate, isooctyl (meth)acrylate, decyl (meth)acrylate, dodecyl (meth)acrylate, and the like).

These alkyl (meth)acrylates may be used alone or in combination of two or more. The alkyl (meth)acrylate contains at least an alkyl (meth)acrylate having an alkyl group having 4 to 12 carbon atoms, and preferably contains an alkyl (meth)acrylate having an alkyl group having 4 to 12 carbon atoms and an alkyl (meth)acrylate having an alkyl group having 1 to 3 carbon atoms.

A content ratio of the alkyl (meth)acrylate having an alkyl group having 4 to 12 carbon atoms is, for example, 60% by mass or more, preferably 80% by mass or more, and for example, 100% by mass or less, preferably 90% by mass or less with respect to 100% by mass of the (meth)acrylic monomer.

A content ratio of the alkyl (meth)acrylate having an alkyl group having 1 to 3 carbon atoms is, for example, 0% by mass or more, preferably 5% by mass or more, and for example, 35% by mass or less, preferably 15% by mass or less with respect to 100% by mass of the (meth)acrylic monomer.

A content ratio of the alkyl (meth)acrylate is, for example, 60% by mass or more, preferably 85% by mass or more, and for example, 100% by mass or less, preferably 98% by mass or less with respect to 100% by mass of the (meth)acrylic monomer.

Further, the (meth)acrylic monomer preferably further contains a (meth)acrylic acid and a (meth)acryloyl group-containing alkoxysilane compound.

A content ratio of the (meth)acrylic acid is, for example, 0% by mass or more, preferably 1% by mass or more, and for example, 5% by mass or less, preferably 3% by mass or less with respect to 100% by mass of the (meth)acrylic monomer.

The (meth)acryloyl group-containing alkoxysilane compound contains a (meth)acryloyl group and an alkoxysilyl group.

Examples of the (meth)acryloyl group-containing alkoxysilane compound include 3-(meth)acryloxypropyltrimethoxysilane, 3-(meth)acryloxypropyltriethoxysilane, 3-(meth)acryloxypropylmethyldimethoxysilane, and 3-(meth)acryloxypropylmethyldiethoxysilane.

These (meth)acryloyl group-containing alkoxysilane compounds may be used alone or in combination of two or more.

The (meth)acryloyl group-containing alkoxysilane compound preferably contains 3-(meth)acryloxypropyltriethoxysilane, and more preferably consists of 3-(meth)acryloxypropyltriethoxysilane.

A content ratio of the (meth)acryloyl group-containing alkoxysilane compound is, for example, 0% by mass or more, preferably 0.001% by mass or more, and for example, 0.1% by mass or less, preferably 0.05% by mass or less with respect to 100% by mass of the (meth)acrylic monomer.

A content ratio of the (meth)acrylic monomer in the emulsified liquid is, for example, 60% by mass or more, preferably 70% by mass or more, and for example, 90% by mass or less, preferably 80% by mass or less.

Examples of the emulsifier include anionic emulsifiers (for example, sodium lauryl sulfate, ammonium lauryl sulfate, sodium dodecyl benzene sulfonate, sodium polyoxyethylene alkyl ether sulfate, ammonium polyoxyethylene alkyl phenyl ether sulfate, sodium polyoxyethylene alkyl phenyl ether sulfate, and the like) and nonionic emulsifiers (for example, polyoxyethylene alkyl ether, polyoxyethylene alkyl phenyl ether, and the like).

Further, as an emulsifier, a radically polymerizable emulsifier in which a radically polymerizable group (for example, a propenyl group and the like) is introduced into the above-described anionic emulsifier or the above-described nonionic emulsifier can be also used.

These emulsifiers may be used alone or in combination of two or more.

The emulsifier preferably contains an anionic emulsifier and preferably contains sodium polyoxyethylene alkyl ether sulfate. The emulsifier preferably consists of an anionic emulsifier.

A content ratio of the emulsifier in the emulsified liquid is, for example, 0.01% by mass or more, preferably 0.5% by mass or more, and for example, 5.0% by mass or less, preferably 3.0% by mass or less.

The content ratio of the emulsifier is, for example, 0.5 parts by mass or more, preferably 1.0 part by mass or more, and for example, 5.0 parts by mass or less, preferably 3.0 parts by mass or less with respect to 100 parts by mass of the (meth)acrylic monomer.

Further, a content ratio of the water in the emulsified liquid is, for example, 5% by mass or more, preferably 10% by mass or more, and for example, 35% by mass or less, preferably 25% by mass or less.

The content ratio of the water is, for example, 10 parts by mass or more, preferably 20 parts by mass or more, and for example, 50 parts by mass or less, preferably 40 parts by mass or less with respect to 100 parts by mass of the (meth)acrylic monomer.

Also, the emulsified liquid preferably further contains a chain transfer agent.

Examples of the chain transfer agent include mercaptans such as dodecyl mercaptan (dodecanethiol), glycidyl mercaptan, and 2-mercaptoethanol.

These chain transfer agents may be used alone or in combination of two or more.

The chain transfer agent preferably contains dodecanethiol and more preferably consists of dodecanethiol.

Further, a content ratio of the chain transfer agent in the emulsified liquid is, for example, 0% by mass or more and 0.5% by mass or less.

The content ratio of the chain transfer agent is, for example, 0 parts by mass or more, preferably 0.01 parts by mass or more, and for example, 0.5 parts by mass or less, preferably 0.05 parts by mass or less with respect to 100 parts by mass of the (meth)acrylic monomer.

Examples of the polymerization initiator include an azo-based initiator, a peroxide-based initiator, and a redox-based initiator in which a peroxide and a reducing agent are combined.

Examples of the azo-based initiator include 2,2'-azobis[N-(2-carboxyethyl)-2-methylpropionamidine]hydrate, 2,2'-azobis isobutyronitrile, 2,2'-azobis(2-methylpropionamidine)disulfate, 2,2'-azobis(2-amidinopropane)dihydrochloride 2,2'-azobis[2-(5-methyl-2-imidazolin-2-yl)propane]dihydrochloride, and 2,2' -azobis(N,N' -dimethyl eneisobutylamidine)dihydrochloride.

Examples of the peroxide-based initiator include persulfates (for example, potassium persulfate, ammonium persulfate, and the like), benzoyl peroxide, t-butyl hydroperoxide, and hydrogen peroxide.

Examples of the redox-based initiator include a combination of persulfate and sodium hydrogen sulfite, and a combination of hydrogen peroxide and sodium ascorbate.

These polymerization initiators may be used alone or in combination of two or more.

As the polymerization initiator, preferably, an azo-based initiator and a redox-based initiator are used in combination.

When the azo-based initiator and the redox-based initiator are used in combination, first, the above-described emulsified liquid is added to an initiator solution containing the azo-based initiator to subject a (meth)acrylic monomer to emulsion polymerization.

A mixing ratio of the azo-based initiator is, for example, 0.01 parts by mass or more, preferably 0.05 parts by mass or more, and for example, 0.5 parts by mass or less, preferably 0.2 parts by mass or less with respect to 100 parts by mass of the (meth)acrylic monomer.

A polymerization temperature in the presence of the azo-based initiator is, for example, 20°C or more, preferably 40°C or more, and for example, 100°C or less, preferably 80°C or less.

Next, a peroxide of a redox-based initiator is added to a reaction liquid of the emulsion polymerization. A mixing ratio of the peroxide is, for example, 0.03 parts by mass or more, preferably 0.05 parts by mass or more, and for example, 0.2 parts by mass or less, preferably 0.1 parts by mass or less with respect to 100 parts by mass of the (meth)acrylic monomer.

Then, a reducing agent of a redox-based initiator is added to a reaction liquid to which the peroxide is added, and the obtained mixture is subjected to a redox treatment. A mixing ratio of the reducing agent is, for example, 0.1 parts by mass or more, preferably 0.2 parts by mass or more, and for example, 1.0 part by mass or less, preferably 0.8 parts by mass or less with respect to 100 parts by mass of the (meth)acrylic monomer.

A range of the temperature of the redox treatment is, for example, the same as the range of the polymerization temperature in the presence of the azo-based initiator.

Thus, a (meth)acrylic polymer which is a polymer of a (meth)acrylic monomer is produced, and a (meth)acrylic polymer emulsion containing a (meth)acrylic polymer and water is prepared.

Further, the first pressure-sensitive adhesive layer 3 containing a pressure-sensitive adhesive composition is prepared from the (meth)acrylic polymer emulsion.

The acrylic polymer emulsion is cooled to room temperature (25°C) if necessary. In addition, if necessary, a pH adjusting agent (for example, ammonia water and the like) is added to the acrylic polymer emulsion. Thus, a pH of the acrylic polymer emulsion is adjusted to, for example, 5.0 or more and 8.0 or less.

The solid content concentration (NV) of the acrylic polymer emulsion is, for example, 30% by mass or more, preferably 40% by mass or more, and for example, 70% by mass or less, preferably 60% by mass or less.

An average particle size of the emulsion in the acrylic polymer emulsion is, for example, 100 nm or more and 300 nm or less.

Then, the (meth)acrylic polymer emulsion is, for example, applied onto the nonwoven fabric carrier 2 or the first release liner 5, and then, dried if necessary.

Thus, the first pressure-sensitive adhesive layer 3 containing a water-dispersed pressure-sensitive adhesive composition is prepared.

Further, the water-dispersed pressure-sensitive adhesive composition preferably contains a tackifier in addition to the (meth)acrylic polymer described above. In this case, the tackifier is added to the (meth)acrylic polymer emulsion.

Examples of the tackifier include a rosin-based resin, a rosin derivative resin, a petroleum-based resin, a terpene-based resin, a phenol-based resin, and a ketone-based resin.

These tackifiers may be used alone or in combination of two or more.

Of the tackifiers, preferably, a rosin-based resin is used.

A content ratio of the tackifier is, for example, 5 parts by mass or more, preferably 10 parts by mass or more, and for example, 40 parts by mass or less, preferably 30 parts by mass or less with respect to 100 parts by mass of the (meth)acrylic polymer.

In addition, if necessary, the water-dispersed pressure-sensitive adhesive composition may contain a known additive such as a viscosity modifier, a leveling agent, a plasticizer, a filler, a stabilizer, an antiseptic, and an antiaging agent at an appropriate ratio.

The second pressure-sensitive adhesive layer 4 is disposed at the other side of the nonwoven fabric carrier 2 in the thickness direction. Specifically, the second pressure-sensitive adhesive layer 4 is disposed on the other surface of the nonwoven fabric carrier 2 in the thickness direction. The second pressure-sensitive adhesive layer 4 is described in the same manner as the first pressure-sensitive adhesive layer 3. Therefore, the description of the second pressure-sensitive adhesive layer 4 is omitted.

The first release liner 5 is located on the opposite side of the nonwoven fabric carrier 2 with respect to the first pressure-sensitive adhesive layer 3. The first release liner 5 is peelably attached to one surface of the first pressure-sensitive adhesive layer 3 in the thickness direction in order to protect the first pressure-sensitive adhesive layer 3 before the use of the double-sided pressure-sensitive adhesive tape 1. The first release liner 5 has a flat plate shape (sheet shape). The first release liner 5 is formed from a resin film having flexibility. Examples of the resin film include fluorine-based films such as polytetrafluoroethylene, polyolefin films such as polyethylene and polypropylene, and polyester films such as polyethylene terephthalate.

An attachment surface of the first release liner 5 is subjected to a surface treatment with a release treatment agent if necessary. Examples of the release treatment agent include a silicone-based release treatment agent, a long-chain alkyl-based release treatment agent, a fluorine-based release treatment agent, and a molybdenum sulfide-based release treatment agent. These release treatment agents may be used alone or in combination of two or more.

The first release liner 5 is peeled from the first pressure-sensitive adhesive layer 3 at the time of the use of the double-sided pressure-sensitive adhesive tape 1. Then, the exposed first pressure-sensitive adhesive layer 3 pressure-sensitively adheres to an substrate or an object.

The second release liner 6 is located on the opposite side of the nonwoven fabric carrier 2 with respect to the second pressure-sensitive adhesive layer 4. The second pressure-sensitive adhesive layer 4 is peelably attached to the other surface of the second pressure-sensitive adhesive layer 4 in the thickness direction in order to protect the second pressure-sensitive adhesive layer 4 before the use of the double-sided pressure-sensitive adhesive tape 1. The second release liner 6 is described in the same manner as the first release liner 5. Therefore, the description of the second release liner 6 is omitted. The second release liner 6 is peeled from the second pressure-sensitive adhesive layer 4 at the time of the use of the double-sided pressure-sensitive adhesive tape 1. Then, the exposed second pressure-sensitive adhesive layer 4 pressure-sensitively adheres to an substrate or an object.

In order to produce the double-sided pressure-sensitive adhesive tape 1, for example, the above-described (meth)acrylic polymer emulsion is applied onto the first release liner 5 by a known application method. Thereafter, a coating film of the (meth)acrylic polymer emulsion is, if necessary, dried to form the first pressure-sensitive adhesive layer 3.

Then, the first pressure-sensitive adhesive layer 3 on the first release liner 5 is compressively bonded to one surface of the nonwoven fabric carrier 2 in the thickness direction so that the first pressure-sensitive adhesive layer 3 is in direct contact with one surface of the nonwoven fabric carrier 2 in the thickness direction.

Then, the above-described (meth)acrylic polymer emulsion is directly applied to the other surface of the nonwoven fabric carrier 2 in the thickness direction by a known application method. Thereafter, a coating film is, if necessary, dried to form the second pressure-sensitive adhesive layer 4.

Next, the second release liner 6 is compressively bonded to the opposite side of the nonwoven fabric carrier 2 with respect to the second pressure-sensitive adhesive layer 4.

Thus, the double-sided pressure-sensitive adhesive tape 1 is produced.

The double-sided pressure-sensitive adhesive tape 1 includes the second release liner 6, the second pressure-sensitive adhesive layer 4, the nonwoven fabric carrier 2, the first pressure-sensitive adhesive layer 3, and the first release liner 5 in order in the thickness direction of the nonwoven fabric carrier 2.

The double-sided pressure-sensitive adhesive tape 1 is, for example, used in the production of various industrial products, and is preferably used in the production of automobiles. More specifically, the double-sided pressure-sensitive adhesive tape 1 is preferably used when an automobile component (for example, wire harness) is fixed to a vehicle frame having a curved surface. In other words, the double-sided pressure-sensitive adhesive tape 1 is used for fixing an automobile component (wire harness).

At the time of the use of the double-sided pressure-sensitive adhesive tape 1, as described above, the first release liner 5 is peeled from the first pressure-sensitive adhesive layer 3, and the second release liner 6 is peeled from the second pressure-sensitive adhesive layer 4. Therefore, in a usage state of the double-sided pressure-sensitive adhesive tape 1, a tape main body 1A including the nonwoven fabric carrier 2, the first pressure-sensitive adhesive layer 3, and the second pressure-sensitive adhesive layer 4 and not including the first release liner 5 and the second release liner 6 is adhesively bonded to an substrate.

In the double-sided pressure-sensitive adhesive tape 1, the nonwoven fabric carrier 2 contains the colorant, while the first pressure-sensitive adhesive layer 3 and the second pressure-sensitive adhesive layer 4 do not contain the colorant. Then, the basis weight of the nonwoven fabric carrier 2 is the above-described lower limit or more and the thickness of the nonwoven fabric carrier 2 is the above-described lower limit or more. Therefore, it is possible to improve the visibility of the tape main body 1A in a state where the double-sided pressure-sensitive adhesive tape 1 (specifically, the tape main body 1A) is adhesively bonded to the curved surface of the substrate. Also, since the basis weight of the nonwoven fabric carrier 2 is the above-described upper limit or less and the thickness of the nonwoven fabric carrier 2 is the above-described upper limit or less, even when the double-sided pressure-sensitive adhesive tape 1 (specifically, the tape main body 1A) is adhesively bonded to the curved surface of the substrate, it is possible to reduce the elastic force of the nonwoven fabric carrier 2, and it is possible to suppress the peeling of the tape main body 1A from the substrate.

### 3. Modified Examples

As shown in FIG. 1, the double-sided pressure-sensitive adhesive tape 1 includes the nonwoven fabric carrier 2, the first pressure-sensitive adhesive layer 3, the second pressure-sensitive adhesive layer 4, the first release liner 5, and the second release liner 6. However, the pressure-sensitive adhesive tape of the present invention is not particularly limited as long as it includes the nonwoven fabric carrier 2 and the first pressure-sensitive adhesive layer 3.

The pressure-sensitive adhesive tape may consist of the nonwoven fabric carrier 2 and the first pressure-sensitive adhesive layer 3. The pressure-sensitive adhesive tape may consist of the nonwoven fabric carrier 2, the first pressure-sensitive adhesive layer 3, and the first release liner 5. The pressure-sensitive adhesive tape may consist of the nonwoven fabric carrier 2, the first pressure-sensitive adhesive layer 3, and the second pressure-sensitive adhesive layer 4. The pressure-sensitive adhesive tape may consist of the nonwoven fabric carrier 2, the first pressure-sensitive adhesive layer 3, the second pressure-sensitive adhesive layer 4, and the first release liner 5.

Also, in the modified examples, the same function and effect as that of the above-described embodiment can be achieved.

### Examples

Next, the present invention is more specifically described based on Preparation Examples, Examples, and Comparative Examples shown below. The present invention is however not limited by Preparation Examples, Examples, and Comparative Examples. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF EMBODIMENTS".

### <Preparation of Nonwoven Fabric Carrier>

### «Preparation Example 1»

Black pigment (carbon black) (1 part by mass) was added to 100 parts by mass of a nonwoven fabric A (material: pulp/ rayon/ vinylon binder, trade name: chemical fiber paper black 14.0 g/m², manufactured by NIPPON PAPER PAPYLIA CO., LTD.) to dye the nonwoven fabric. Thus, a nonwoven fabric carrier was obtained. The air permeability, the basis weight, and the thickness of the nonwoven fabric carrier are shown in Table 1.

### «Preparation Example 2»

A nonwoven fabric carrier was obtained in the same manner as in Preparation Example 1, except that the nonwoven fabric A (trade name: chemical fiber paper black 14.0 g/m², manufactured by NIPPON PAPER PAPYLIA CO., LTD.) was changed to a nonwoven fabric B (material: pulp, trade name: No. 4134, manufactured by DAIFUKU PAPER MFG. CO., LTD.).

### «Preparation Example 3»

A nonwoven fabric carrier was obtained in the same manner as in Preparation Example 1, except that the nonwoven fabric A (trade name: chemical fiber paper black 14.0 g/m², manufactured by NIPPON PAPER PAPYLIA CO., LTD.) was changed to a nonwoven fabric C (material: pulp, trade name: NTO-16P-black, manufactured by DAIFUKU PAPER MFG. CO., LTD.).

### «Preparation Example 4»

A nonwoven fabric carrier was obtained in the same manner as in Preparation Example 1, except that the nonwoven fabric A (trade name: chemical fiber paper black 14.0 g/m², manufactured by NIPPON PAPER PAPYLIA CO., LTD.) was changed to a nonwoven fabric D (material: pulp/ rayon/ vinylon binder, trade name: chemical fiber paper black 30.0 g/m², manufactured by NIPPON PAPER PAPYLIA CO., LTD.).

### «Preparation Example 5»

A nonwoven fabric carrier was obtained in the same manner as in Preparation Example 1, except that the nonwoven fabric A (trade name: chemical fiber paper black 14.0 g/m², manufactured by NIPPON PAPER PAPYLIA CO., LTD.) was changed to a nonwoven fabric E (material: pulp, manufactured by FUJI Corporation).

### «Preparation Example 6»

A nonwoven fabric carrier was obtained in the same manner as in Preparation Example 1, except that the nonwoven fabric A (trade name: chemical fiber paper black 14.0 g/m², manufactured by NIPPON PAPER PAPYLIA CO., LTD.) was changed to a nonwoven fabric F.

### «Preparation Example 7»

A nonwoven fabric carrier was obtained in the same manner as in Preparation Example 1, except that the nonwoven fabric A (trade name: chemical fiber paper black 14.0 g/m², manufactured by NIPPON PAPER PAPYLIA CO., LTD.) was changed to a nonwoven fabric G (material: polyester, trade name: PET paper 30 g/m², manufactured by NIPPON PAPER PAPYLIA CO., LTD.).

### «Preparation Example 8»

A nonwoven fabric carrier was obtained in the same manner as in Preparation Example 1, except that the nonwoven fabric A (trade name: chemical fiber paper black 14.0 g/m², manufactured by NIPPON PAPER PAPYLIA CO., LTD.) was changed to a nonwoven fabric H (material: pulp, trade name: F-18 processed paper, manufactured by NIPPON PAPER PAPYLIA

### CO., LTD.).

### «Preparation Example 9»

A nonwoven fabric carrier was obtained in the same manner as in Preparation Example 1, except that the nonwoven fabric A (trade name: chemical fiber paper black 14.0 g/m², manufactured by NIPPON PAPER PAPYLIA CO., LTD.) was changed to a nonwoven fabric I (material: pulp, trade name: MM base paper, manufactured by Miki Tokusyu Paper Mfg. Co., Ltd.).

### «Preparation Example 10»

A nonwoven fabric carrier was obtained in the same manner as in Preparation Example 1, except that the nonwoven fabric A (trade name: chemical fiber paper black 14.0 g/m², manufactured by NIPPON PAPER PAPYLIA CO., LTD.) was changed to a nonwoven fabric J (material: pulp, trade name: NTO-16P-black, manufactured by DAIFUKU PAPER MFG. CO., LTD.).

### «Examples 1 to 5 and Comparative Examples 1 to 4»

Distilled water (60 parts by mass), and 0.1 parts by mass of an emulsifier (sodium polyoxyethylene alkyl ether sulfate, trade name: LATEMUL E-118B, manufactured by Kao Corporation) were added to a reaction vessel. The reaction vessel was provided with a container body, a stirrer, a thermometer, a reflux condenser, a dropping device, and a nitrogen introducing pipe.

Then, 0.1 parts by mass of a polymerization initiator (2,2'-azobis[N-(2-carboxyethyl)-2-methylpropionamidine]hydrate, trade name: VA-057, manufactured by Wako Pure Chemical Industries, Ltd.) was added to the reaction vessel.

Further, 85 parts by mass of 2-ethylhexylacrylate, 13 parts by mass of methyl acrylate, 1.5 parts by mass of acrylic acid, 0.5 parts by mass of methacrylic acid, 0.02 parts by mass of 3-methacryloxypropyltrimethoxysilane (trade name: KBM-503, manufactured by Shin-Etsu Chemical Co., Ltd.), 0.033 parts by mass of a chain transfer agent (dodecanethiol), 1.9 parts by mass of the above-described emulsifier, and 28.6 parts by mass of distilled water were mixed and emulsified to prepare an emulsified liquid.

Next, the temperature of the emulsified liquid was adjusted to 60°C. Then, the emulsified liquid was gradually added dropwise to the above-described reaction vessel over 4 hours to be subjected to emulsion polymerization. Thereafter, the reaction liquid was stirred at 60°C for 3 hours, and heating of the reaction liquid was stopped.

Then, 0.75 parts by mass of 10% by mass hydrogen peroxide water was added to the reaction liquid. Thereafter, the reaction liquid was stirred for 5 minutes. Subsequently, 0.5 parts by mass of sodium ascorbate was added to the reaction liquid, and the obtained mixture was subjected to a redox treatment. Thereafter, the reaction liquid was cooled to room temperature (25°C). Then, 10% by mass ammonia water was added to the reaction liquid after cooling to adjust a pH of the reaction liquid to 6.5.

Thus, a (meth)acrylic polymer emulsion was obtained. The solid content concentration (NV) of the (meth)acrylic polymer emulsion was about 51% by mass. An average particle size of the emulsion was about 200 nm.

Then, 10 parts by mass (in terms of solid content) of a first water-dispersed rosin resin (trade name: SUPER ESTER KE-802, manufactured by Arakawa Chemical Industries, Ltd.) and 10 parts by mass of a second water-dispersed rosin resin (trade name: SUPER ESTER NS-100H, manufactured by Arakawa Chemical Industries, Ltd.) were added to the (meth)acrylic polymer emulsion.

Thereafter, a pH adjusting agent (10% by mass ammonia water) and a thickener (polyacrylic acid) were added to the (meth)acrylic polymer emulsion. A pH of the (meth)acrylic polymer emulsion was 7.2. The viscosity of the (meth)acrylic polymer emulsion was 8 Pa·s.

Then, the (meth)acrylic polymer emulsion was applied to the surface of a first release liner (trade name: SLB-80WD (V2), manufactured by Kaito Chemical Industry Co., Ltd.). The front surface and the back surface of the first release liner were treated with a silicone-based release agent.

Thereafter, a coating film of the (meth)acrylic polymer emulsion was dried at 100°C for 2 minutes. Thus, a first pressure-sensitive adhesive layer made of a water-dispersed acrylic pressure-sensitive adhesive composition was formed. A thickness of the first pressure-sensitive adhesive layer was about 60 µm.

Next, the first pressure-sensitive adhesive layer on the first release liner was disposed on the nonwoven fabric so that the first pressure-sensitive adhesive layer was in direct contact with the front surface of each of the nonwoven fabrics of Preparation Examples. Therefore, the nonwoven fabric, the first pressure-sensitive adhesive layer, and the first release liner were laminated in order in the thickness direction of the nonwoven fabric.

Then, the (meth)acrylic polymer emulsion to which the water-dispersed rosin resin, the pH adjusting agent, and the thickener were added was directly applied to the back surface of the nonwoven fabric. Thereafter, a coating film of the (meth)acrylic polymer emulsion was dried at 100°C for 2 minutes. Thus, a second pressure-sensitive adhesive layer made of the water-dispersed acrylic pressure-sensitive adhesive composition was formed. A thickness of the second pressure-sensitive adhesive layer was about 60 µm.

Thereafter, a second release liner was attached to the opposite side of the nonwoven fabric carrier with respect to the second pressure-sensitive adhesive layer. Thus, a laminate was obtained. The laminate included the first release liner, the second pressure-sensitive adhesive layer, the nonwoven fabric, the first pressure-sensitive adhesive layer, and the first release liner in order in the thickness direction of the nonwoven fabric. Thereafter, the laminate was retained in an oven at 50°C for 24 hours.

By the description above, a double-sided pressure-sensitive adhesive tape was obtained.

### «Comparative Example 5»

A double-sided pressure-sensitive adhesive tape was obtained in the same manner as in Example 1, except that the water-dispersed acrylic pressure-sensitive adhesive composition contained a black pigment and the nonwoven fabric carrier A of Preparation Example 1 was changed to the nonwoven fabric carrier C of Preparation Example 3. The black pigment was added to the (meth)acrylic polymer emulsion. An addition ratio of the black pigment was 10 parts by mass with respect to 100 parts by mass of the (meth)acrylic monomer.

### Evaluation

### (Visibility)

Each of the double-sided pressure-sensitive adhesive tapes of Examples and Comparative Examples was cut into a size of 10 cm× 10 cm. Thereafter, the first release liner was peeled from the first pressure-sensitive adhesive layer. Next, the first pressure-sensitive adhesive layer was attached to a white polystyrene film. The white polystyrene film had a color taste of L*: 88.85, a*: 0.45, and b*: -5.76.

Next, the second release liner was peeled from the second pressure-sensitive adhesive layer. Then, the color taste of the double-sided pressure-sensitive adhesive tape (tape main body) was measured from the opposite side of the nonwoven fabric carrier with respect to the second pressure-sensitive adhesive layer. The color taste was measured with a multi-angle spectrophotometer (MA68II, manufactured by X-Rite Inc.). The measurement angle was 45°.

Then, the color taste of the double-sided pressure-sensitive adhesive tape was evaluated on the basis of the following criteria. The results are shown in Table 1.
Good: L*was 40 or less.
Bad: L* was above 40.

### (Adhesive Properties (Repulsion Resistance))

The adhesive properties (repulsion resistance) of each of the double-sided pressure-sensitive adhesive tapes of Examples and Comparative Examples were evaluated by a repulsion resistance test (foam repulsion resistance test) described in Japanese Unexamined Patent Publication No. 2015-218283.

Specifically, in each of the double-sided pressure-sensitive adhesive tapes of Examples and Comparative Examples, the first release liner was peeled from the first pressure-sensitive adhesive layer. Then, a flexible urethane foam (trade name: ECS (gray)) was attached to the first pressure-sensitive adhesive layer. Thereafter, a 1-kg roller was brought into contact with the flexible urethane foam from the opposite side of the first pressure-sensitive adhesive layer to reciprocate the 1-kg roller.

Thus, a laminate was obtained. The laminate included the second release liner, the second pressure-sensitive adhesive layer, the nonwoven fabric carrier, the first pressure-sensitive adhesive layer, and the flexible urethane foam in order.

Next, the laminate was retained at 23°C for 24 hours. Then, the laminate was cut into a size of a width of 10 mm and a length of 50 mm. Thus, a sample was obtained.

Then, in the sample, the second release liner was peeled from the second pressure-sensitive adhesive layer. Next, an ABS plate was attached to a first portion from one end to 10 mm of the second pressure-sensitive adhesive layer in a length direction of the sample. Subsequently, a 2-kg roller was brought into contact with the ABS plate from the opposite side of the second pressure-sensitive adhesive layer to reciprocate the 2-kg roller.

Then, the sample was folded back, and a second portion other than the first portion in the second pressure-sensitive adhesive layer was attached to the back surface of the ABS plate. Thereafter, the sample attached to the ABS plate was left to stand under the environment of 23°C and 50 %RH for 24 hours.

Then, the adhesive properties (repulsion resistance) of the double-sided pressure-sensitive adhesive tape were evaluated based on whether or not the first portion of the second pressure-sensitive adhesive layer was peeled from the ABS plate. When the first portion of the second pressure-sensitive adhesive layer was peeled from the ABS plate, the adhesive properties (repulsion resistance) of the double-sided pressure-sensitive adhesive tape were evaluated as "Bad". When the first portion of the second pressure-sensitive adhesive layer was not peeled from the ABS plate, the adhesive properties (repulsion resistance) of the double-sided pressure-sensitive adhesive tape were evaluated as "Good". The results are shown in Table 1.

[Table 1]

**Table 1**

| No. | | Ex. 1 | Ex. 2 | Ex. 3 | Ex. 4 | Ex. 5 |
|---|---|---|---|---|---|---|
| Nonwoven fabric Carrier | Nonwoven Fabric | A (Preparation Ex. 1) | B (Preparation Ex. 2) | C (Preparation Ex. 3) | D (Preparation Ex. 4) | E (Preparation Ex. 5) |
| | Material | Pulp/Rayon/Vinylon Binder | Pulp | Pulp | Pulp/Rayon/Vinylon Binder | Pulp |
| | Air Permeability [s] | 0.21 | 0.30 | 0.50 | - | 0.15 |
| | Basis Weight [g/m²] | 14 | 18 | 16 | 30 | 15 |
| | thickness [µm] | 38 | 37 | 32 | 50 | 42 |
| Presence or Absence of Coloring in Pressure-Sensitive Adhesive Layer | | Absence | Absence | Absence | Absence | Absence |
| Evaluation | Visibility (L^{∗}45°) | Good | Good | Good | Good | Good |
| | | 31 | 23 | 20 | 15 | 20 |
| | Adhesive Properties (Repulsion Resistance) | Good | Good | Good | Good | Good |

| No. | | Comparative Ex. 1 | Comparative Ex. 2 | Comparative Ex. 3 | Comparative Ex. 4 | Comparative Ex. 5 |
|---|---|---|---|---|---|---|
| Nomwoven woven Fabric Carrier | Nonwoven Fabric | F (Preparation Ex. 6) | G (Preparation Ex. 7) | H (Preparation Ex. 8) | I (Preparation Ex. 9) | C (Preparation Ex. 3) |
| | Material | - | Polyester | Pulp | Pulp | Pulp |
| | Air Permeability [s] | - | 3.00 | 0.07 | - | 0.50 |
| | Basis Weight [g/m²] | 20 | 30 | 18 | 8 | 16 |
| | Thickness [µm] | 15 | 40 | 60 | 23 | 32 |
| Presence or Absence of Coloring in Pressure-Sensitive Adhesive Layer | | Absence | Absence | Absence | Absence | Presence |
| Evaluation | Visibility (L^{∗}45°) | Bad | Good | Good | Bad | Good |
| | | 60 | 25 | 23 | 50 | 5 |
| | Adhesive Properties (Repulsion Resistance) | Good | Bad | Bad | Good | Bad |

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims. Description of Reference Numerals
- 1: Double-sided pressure-sensitive adhesive tape
- 2: Nonwoven fabric carrier
- 3: First pressure-sensitive adhesive layer
- 4: Second pressure-sensitive adhesive layer
- 5: First release liner
- 6: Second release liner

## Claims

1. A pressure-sensitive adhesive tape comprising:
a nonwoven fabric carrier and
a pressure-sensitive adhesive layer disposed at one side of the nonwoven fabric carrier in a thickness direction, wherein
the nonwoven fabric carrier contains a colorant,
a basis weight of the nonwoven fabric carrier is 10 g/m² or more and 30 g/m² or less,
a thickness of the nonwoven fabric carrier is 20 µm or more and 50 µm or less, and
the pressure-sensitive adhesive layer does not contain a colorant.

2. The pressure-sensitive adhesive tape according to claim 1, wherein
the pressure-sensitive adhesive layer contains a water-dispersed pressure-sensitive adhesive composition.

3. The pressure-sensitive adhesive tape according to claim 1 or 2 used for fixing a wire harness.
